(19) Europäisches Patentamt

European Patent Office

Office européen des brevets

(11) **EP 1 203 001 B1**

(12) **EUROPÄISCHE PATENTSCHRIFT**

(45) Veröffentlichungstag und Bekanntmachung des Hinweises auf die Patenterteilung:
**05.03.2003 Patentblatt 2003/10**

(21) Anmeldenummer: **00925279.2**

(22) Anmeldetag: **12.05.2000**

(51) Int Cl.$^7$: **C07F 9/6571**, H01M 10/40

(86) Internationale Anmeldenummer:
**PCT/EP00/04301**

(87) Internationale Veröffentlichungsnummer:
**WO 01/007450 (01.02.2001 Gazette 2001/05)**

(54) **TRIS(OXALATO)PHOSPHATE, VERFAHREN ZU DEREN HERSTELLUNG UND DEREN VERWENDUNG**

TRIS(OXALATO)PHOSPHATES, METHOD FOR THEIR PREPARATION AND THEIR USE

TRIS(OXALATO)PHOSPHATES, PROCEDE DE PREPARATION ET UTILISATION

(84) Benannte Vertragsstaaten:
**AT BE CH CY DE DK ES FI FR GB GR IE IT LI LU MC NL PT SE**

(30) Priorität: **22.07.1999 DE 19933898**

(43) Veröffentlichungstag der Anmeldung:
**08.05.2002 Patentblatt 2002/19**

(73) Patentinhaber: **Chemetall GmbH
60487 Frankfurt am Main (DE)**

(72) Erfinder:
- **WIETELMANN, Ulrich
  D-61381 Friedrichsdorf (DE)**
- **SCHADE, Klaus
  D-65205 Wiesbaden (DE)**
- **LISCHKA, Uwe
  D-60437 Niedereschbach (DE)**

(74) Vertreter: **Uppena, Franz, Dr. et al
Dynamit Nobel AG
Patente, Marken & Lizenzen
53839 Troisdorf (DE)**

(56) Entgegenhaltungen:
**EP-A- 0 631 340          WO-A-98/07729**

- **HANDA M ET AL: "NEW LITHIUM SALT WITH A CHELATE COMPLEX OF PHOSPHORUS FOR LITHIUM BATTERY ELECTROLYTES" ELECTROCHEMICAL AND SOLID-STATE LETTERS,US,IEEE SERVICE CENTER, PISCATAWAY, NJ, Bd. 2, Nr. 2, Februar 1999 (1999-02), Seiten 60-62, XP000864931 ISSN: 1099-0062 in der Anmeldung erwähnt**

## Beschreibung

Gegenstand der Erfindung sind Tris(oxalato)phosphate, $M[(P(C_2O_4)_3]$, ein Verfahren zu deren Herstellung und die Verwendung von Tris-(oxalato)phosphaten, u.a. als Leitsalze in elektrochemischen Speichersystemen.

Elektrochemische Speichersysteme sind z.B. Batterien und sogenannte Superkondensatoren. In diesen Systemen finden Elektrolytlösungen, bestehend aus einem Leitsalz und einem aprotischen Lösungsmittel, Anwendung. Moderne Systeme, wie z.B. Lithiumionenbatterien, besitzen eine hohe Leistungsdichte und Ausgangsspannung (häufig $\geq$ 3 V). Für diese Zellen werden aprotische Elektrolytsysteme benötigt.

Derzeit wird in allen kommerziellen Lithiumionenbatterien als Leitsalz Lithiumhexafluorophosphat ($LiPF_6$) verwendet. Dieses Salz besitzt die notwendigen Voraussetzungen für einen Einsatz in Hochenergiezellen, d.h., es ist in aprotischen Lösungsmitteln gut löslich, es führt zu Elektrolyten mit hohen Leitfähigkeiten, und es weist ein hohes Maß an elektrochemischer Stabilität auf. Oxidative Zersetzung tritt, erst bei Potentialen > ca. 4,5 V auf.

$LiPF_6$ hat jedoch auch schwerwiegende Nachteile, die hauptsächlich auf seine mangelnde thermische Stabilität zurückgeführt werden. In Lösung findet eine, wenn auch geringfügige, Dissoziation in LiF und $PF_5$ statt, was zu einer durch die Lewissäure $PF_5$ verursachten kationischen Polymerisation des Lösungsmittels führen kann.

Beim Kontakt mit Feuchtigkeit wird ätzender Fluorwasserstoff freigesetzt, der zum einen wegen seiner Giftigkeit und Korrosivität die Handhabung erschwert und zum anderen zur (teilweisen) Auflösung der als Kathodenmaterial eingesetzten Übergangsmetalloxide (z.B. $LiMn_2O_4$) führen kann. Auf diese Art wird die Zyklenstabilität des betroffenen elektrochemischen Energiespeichers in Mitleidenschaft gezogen.

Vor diesem Hintergrund gibt es intensive Bemühungen mit dem Ziel, alternative Leitsalze zu entwickeln. Als solche werden vor allem Lithiumsalze mit perfluorierten organischen Resten geprüft. Zu nennen sind insbesondere das Lithiumtrifluormethansulfonat, das Lithium-bis(trifluormethansulfonyl)-imid sowie die Lithiummethide, deren einfachster Grundkörper Lithiumtris(trifluormethansulfonyl)methid ist. Auch diese Salze weisen Nachteile auf, die ihren Einsatz in kommerziellen Lithiumbatterien bisher verhinderten. Das erstgenannte Salz verleiht den mit ihm hergestellten Elektrolyten keine genügend hohe Leitfähigkeit. Die letztgenannten Salze weisen zwar eine dem $LiPF_6$ ebenbürtige Leitfähigkeit auf, sie sind jedoch wegen der aufwendigen Herstellverfahren kommerziell uninteressant. Zudem wirkt das Imid korrosiv auf Aluminiumbleche, die in vielen Batteriesystemen als Stromableiter eingesetzt werden. Wegen des hohen Fluorgehaltes der Verbindungen sind außerdem unter ungünstigen Bedingungen exotherme Reaktionen mit dem Lithium der Elektrode zu befürchten.

Dem Lithiumhexafluorophosphat und allen oben aufgeführten Leitsalzalternativen ist ihr mehr oder weniger hoher Fluorgehalt gemein. Aufgrund dieser Tatsache sind die Herstellkosten vergleichsweise hoch und bei der Entsorgung oder dem Recyceln verbrauchter Batterien sind bestimmte Vorsorgemaßnahmen zu treffen, um die Emission fluorhaltiger Stoffe (z.B. giftiger und ätzender Fluorwasserstoff HF) zu vermeiden.

Einen wesentlichen Fortschritt stellen die in der DE 19633027 A1 beschriebenen Lithiumboratkomplexsalze $[(R'O)_2B(OR'')_2]Li$ dar. Dabei sind R' und R'' gleich oder verschieden, R' und R'' sind gegebenenfalls durch eine Einfach- oder Doppelbindung miteinander verbunden, R' und R'' haben jeweils einzeln oder gemeinsam die Bedeutung eines aromatischen Rings aus der Gruppe Phenyl, Naphthyl, Anthracenyl oder Phenanthrenyl, der unsubstituiert oder ein- bis vierfach durch A oder Hal substituiert sein kann, wobei Hal für Fluor oder Chlor steht und A ein Alkylrest mit 1 bis 8 C-Atomen ist, der wiederum ein- bis vierfach halogeniert sein kann.

Nachteilig bei diesen Verbindungen sind zum einen die zwar verbesserten, aber für die geforderten 3 V - Systeme keineswegs ausreichenden Stabilitäten der nichtfluorierten Derivate. So zersetzt sich z.B. das unsubstituierte Lithium-bis[1,2-benzendiolato(2-)-O,O']borat(1-) (das ist der 2:1-Komplex des Brenzcatechins) bereits beim Überschreiten eines anodischen Potentials von 3,6 V. Dieser Wert liegt deutlich unter dem des Standardleitsalzes $LiPF_6$ (ca. 4,5 V). Auch im Falle dieser Chelatoborate sind also nur fluorsubstituierte Derivate genügend oxidationsstabil.

Als weitere Alternative wurde ein Chelatophosphat, nämlich das Lithium-tris [1,2-benzendiolato(2-)-O,O']phosphat geprüft (M. Handa, M. Suzuki, J. Suzuki, H Kanematsu, Y. Sasaki, Electrochemical and Solid-State Letters, 2 (2) 60-62 (1999)). Dieses Salz besitzt einen größeren elektrochemischen Stabilitätsbereich als die entsprechende Borverbindung (Zersetzungsbeginn ab etwa 3,7 V), jedoch liegen die maximal erreichbaren Leitfähigkeiten damit hergestellter Elektrolytlösungen unter 4 mS/cm, d. h. deutlich unter dem vom $LiPF_6$ vorgegebenen Standard.

Für Superkondensatoren sind Salze mit großen Kationen (z.B. $N(R^1R^2R^3R^4)^+$, wobei $R^1$, $R^2$, $R^3$, $R^4$ unabhängig voneinander H oder eine Alkylgruppe mit 1 bis 8 C-Atomen ist) gebräuchlich, da diese gegenüber den Elektrodenmaterialien weitgehend inert sind.

Der Erfindung liegt daher die Aufgabe zugrunde, die Nachteile des Standes der Technik zu beseitigen und halogenfreie, in aprotischen Lösungsmitteln gut lösliche, elektrochemisch und thermisch stabile Verbindungen zu schaffen, die zur Herstellung von Elektrolytlösungen mit guter Leitfähigkeit geeignet sind. Weiterhin sollen Katalysatoren gefunden werden, wie sie beispielsweise für die Hydroaminierung von Aminen eingesetzt werden. Der Erfindung liegt ferner die Aufgabe zugrunde, ein Verfahren zur Herstellung dieser Verbindungen zu schaffen.

Die Aufgabe wird durch die im Anspruch 1 angegebenen Tris-(oxalato)phosphate der allgemeinen Formel M

[P(C$_2$O$_4$)$_3$] mit M = H, Metall oder N(R$^1$R$^2$R$^3$R$^4$) gelöst, wobei R$^1$, R$^2$, R$^3$, R$^4$ unabhängig voneinander H oder eine Alkylgruppe mit 1 bis 8 C-Atomen ist. Als bevorzugte Verbindungen sind im Anspruch 2 Metall-tris-(oxalato)phosphate und als besonders bevorzugte Verbindungen sind in den Ansprüchen 3, 4 und 5 Hydrogen-tris(oxalato)phosphat, Lithium-tris(oxalato)phosphat und Natrium-tris(oxalato)phosphat angegeben. Die unabhängigen Ansprüche 6 und 7 geben ein Verfahren zur Herstellung dieser Verbindungen an, die Ansprüche 8 bis 16 bilden das Verfahren weiter und die Ansprüche 17 bis 19 geben Verwendungen der Verbindungen an.

Es wurde überraschend gefunden, daß diese Tris(oxalato)phosphate das geforderte Eigenschaftsprofil aufweisen und zudem einfach herstellbar sind. Die Verbindungen sind in polar-aprotischen Lösungsmitteln gut bis sehr gut löslich.

Näher untersucht wurde das Lithium-tris(oxalato)phosphat. Die Löslichkeiten in verschiedenen polar-aprotischen Lösungsmitteln ist in der Tabelle 1 angegeben.

Tabelle 1:

| Löslichkeiten von Lithium-tris(oxalato)phosphat | | |
|---|---|---|
| Lösungsmittel | max. Konzentration | |
| | Gew.% | mol/kg |
| THF | 34,5 | 1,1 |
| 1,2-DME | 53 | 1,7 |
| EC/DMC(1:1) | 16 | 0,54 |
| PC/1,2-DME(1:1) | 39,0 | 1,30 |
| Et$_2$O | fast unlöslich | |
| Alkane/Aromaten | unlöslich | |
| THF = Tetrahydrofuran;  1,2-DME = 1,2-Dimethoxyethan;  EC = Ethylencarbonat;  DMC = Dimethylcarbonat; PC = Propylencarbonat;  Et$_2$O = Diethylether | | |

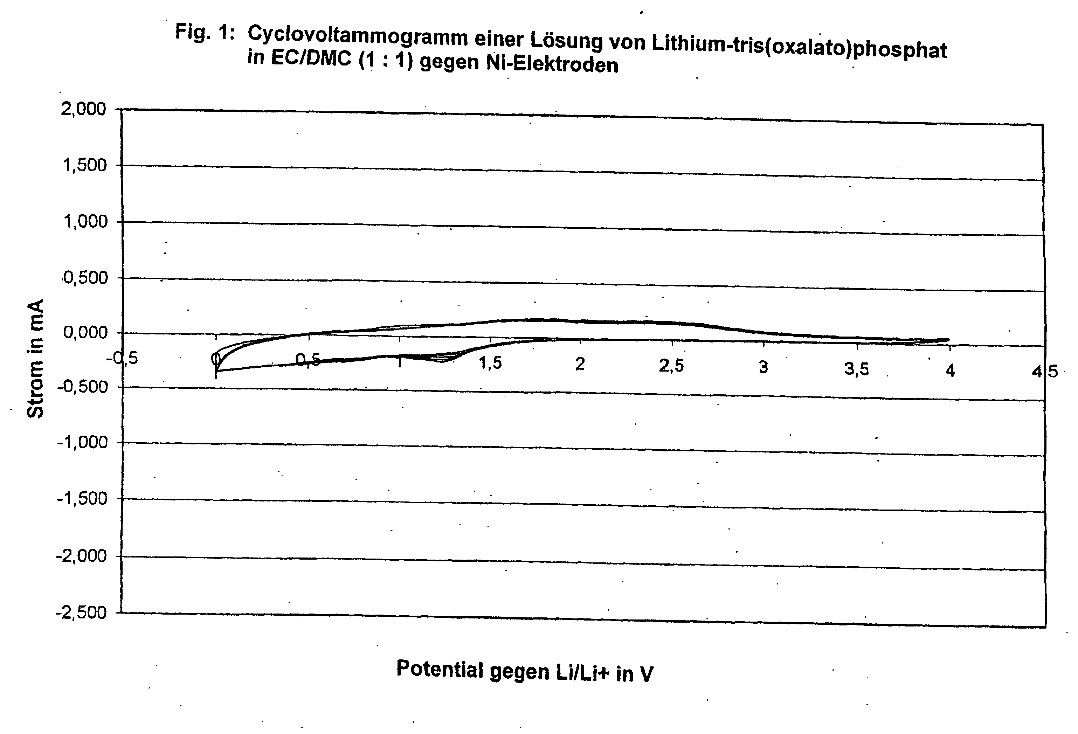

Nach thermogravimetrischen Befunden beginnt die Zersetzung erst oberhalb von 150 °C. Die spezifischen Leitfähigkeiten liegen deutlich über denen der von Handa et al. beschriebenen Chelatophosphatverbindung: In binären Carbonatgemischen werden bis zu ca. 7 mS/cm registriert. Beim Zusatz etherfunktionalisierter Co-Solventien wie z. B. Tetrahydrofuran (THF), Ethylenglykolether, Polyether oder 1,3-Dioxolan werden noch deutlich höhere Leitfähigkeiten gemessen. So weist eine 20 % ige Lösung in Propylencarbonat / 1,2-Dimethoxyethan (1:1) eine Leitfähigkeit von 9,7 mS/cm) auf. An Inertelektroden (z.B. Platin oder Nickel) beginnt die elektrochemische Zersetzung erst bei deutlich über 4 V (siehe Figur 1).

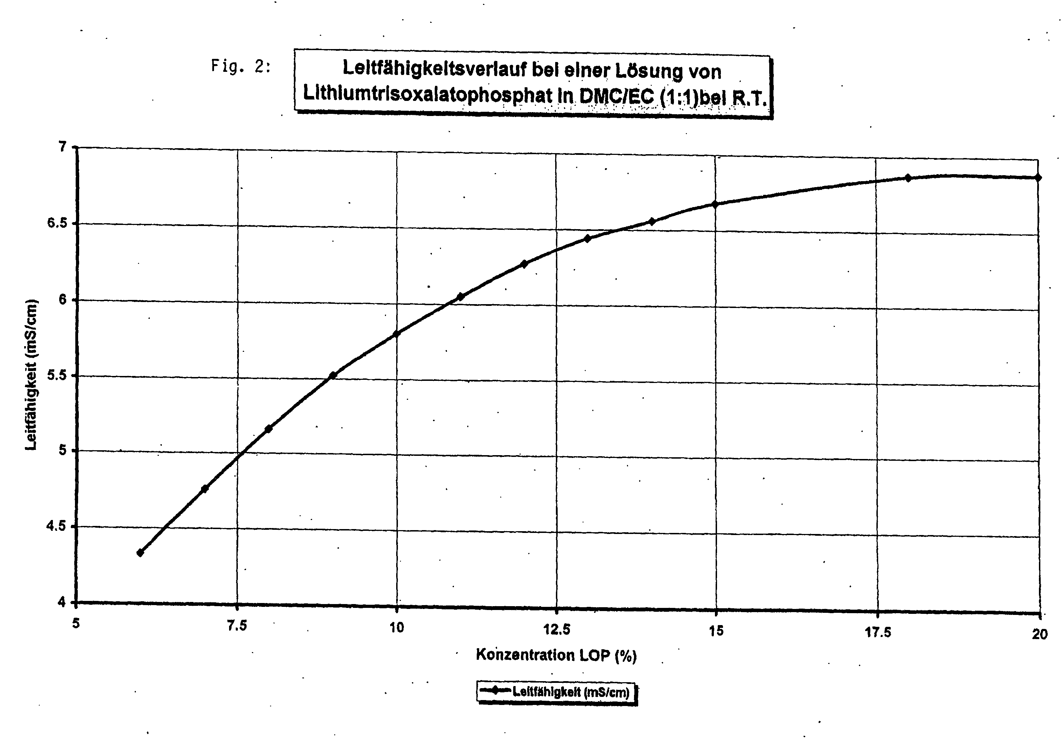

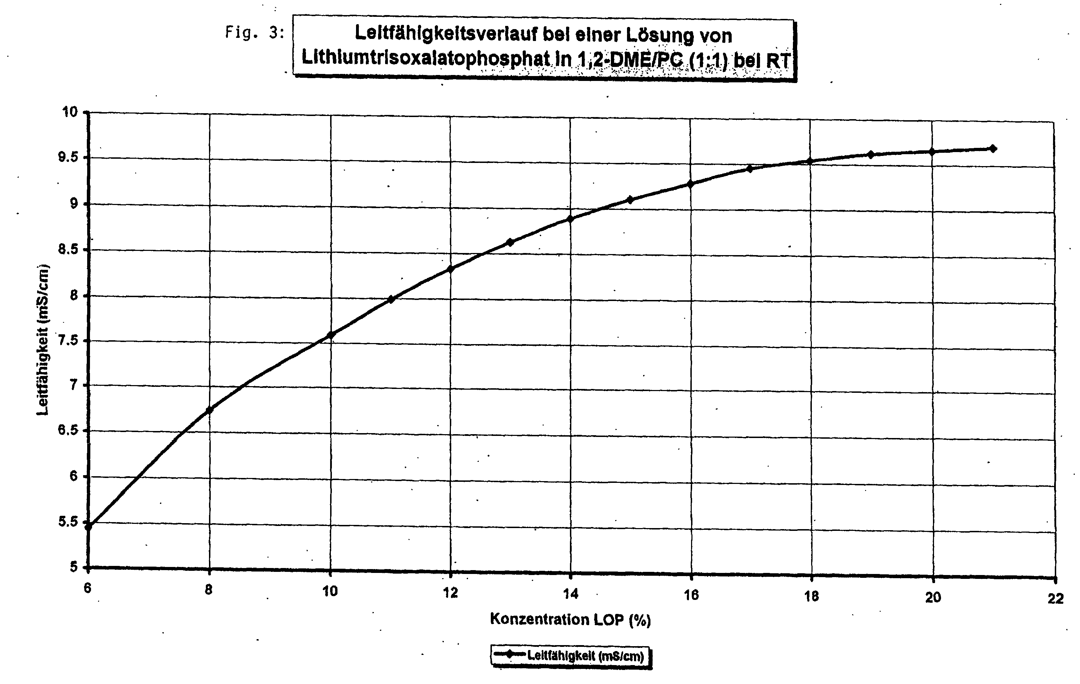

Figur 2 zeigt den Leitfähigkeitsverlauf bei einer lösung von Lithiumtrisoxalatophosphat in DMC/EC (1:1) bei Raumtemperatur. Figur 3 zeigt den Leitfähigkeitsverlauf bei einer lösung von Lithiumtrisoxalatophosphat in 1,2-DME/ PC (1:1) bei Raumtemperatur.

Zur Herstellung von Tris-(oxalato)phosphaten wird in einem ersten Reaktionsschritt Phosphorpentachlorid mit wasserfreier Oxalsäure in Gegenwart eines aprotischen Lösungsmittels gemäß folgender Gleichung umgesetzt:

$$PCl_5 + 3\ C_2O_4H_2 \text{ -----> } H[P(C_2O_4)_3] + 5\ HCl$$

Dazu wird zweckmäßigerweise die Oxalsäure im Lösungsmittel vorgelegt und PCl$_5$ zudosiert (im Labormaßstab mit z.B. einer Feststoffdosierbirne). Es ist aber auch möglich, PCl$_5$ im Lösungsmittel vorzulegen und die Oxalsäure zuzugeben. Als aprotisches Lösungsmittel kann ein Ether (z.B. Diethylether, Tetrahydrofuran, 1,2-Dimethoxyethan) oder ein Carbonat (z.B. Ethylencarbonat, Dimethylcarbonat, Diethylcarbonat, Propylencarbonat) oder ein Kohlenwasserstoff (z.B. Alkan mit 5 bis 12 C-Atomen oder Aromaten, wie z.B. Benzol oder Toluol) oder ein halogenierter Kohlenwasserstoff oder ein teilhalogenierter Kohlenwasserstoff oder ein Gemisch dieser Stoffe eingesetzt werden. Je nach Lösungsvermögen des verwendeten Lösungsmittels sind beide Reaktanden zumindest teilweise gelöst (z.B. bei Ethern als Lösungsmittel) oder lediglich suspendiert (z.B. bei Kohlenwasserstoffen als Lösungsmittel). Die Reaktionstemperatur beträgt -20 bis 120 °C, bevorzugt 0 bis 100 °C. Es wurde festgestellt, daß die Reaktion normalerweise innerhalb weniger Minuten bis Stunden (je nach Ansatzgröße, Zugabegeschwindigkeit der Reaktanden, Lösungsvermögen des Lösungsmittels, Temperatur) beendet war.

Der als Nebenprodukt entstehende Chlorwasserstoff (HCl) entweicht in Abhängigkeit vom gewählten Lösungsmittel und der Reaktionstemperatur schon mehr oder weniger während der Synthese über die Gasphase. Für den Einsatz des späteren Produktes als Leitsalz in elektrochemischen Systemen ist eine weitgehende Befreiung von Chlorid notwendig, z.B. sollte beim Lithium-tris(oxalato)phosphat der Chloridgehalt < 20 ppm liegen.

Zur restlosen Entfernung von HCl gibt es mehrere Möglichkeiten: Nach Beendigung der Reaktion durch Kochen der Reaktionsmischung am Rückfluß, Strippen mittels Durchleitung eines Inertgasstromes (z.B. Stickstoff oder Argon) durch den Reaktionsbehälter, Durchführung der Reaktion unter reduziertem Druck oder teilweise oder vollständige Abdestillation des Lösungsmittels. Bei vollständiger Lösungsmittelentfernung fällt die Chelatophosphorsäure als Feststoff an, der unter reduziertem Druck bei Temperaturen von vorzugsweise 20 bis 50 °C vollständig von flüchtigen sauren Verunreinigungen befreit werden kann.

In einigen Fällen, z.B. bei der Verwendung von Diethylether als Lösungsmittel, kann der Chlorwasserstoff auch durch Flüssig/flüssig-Trennung entfernt werden. Dies ist deshalb möglich, weil sich bei der Reaktion zwei flüssige Phasen bilden: eine schwere Phase, die das gewünschte Zwischenprodukt in Form eines Etherkomplexes und wenig HCl enthält, und eine oben aufschwimmende leichte Phase, in der sich das HCl anreichert. Da die Phosphorverbindung in Ether nur sehr schlecht löslich ist, befinden sich in der oberen Phase keine nennenswerten Produktmengen. Die obere Phase wird abgetrennt und die untere, das Zwischenprodukt enthaltende Phase mehrfach mit reinem Ether extrahiert, bis in der oberen Phase keine Säure mehr nachweisbar ist.

Es können zur möglichst vollständigen Entfernung von HCl auch mehrere dieser Verfahrensschritte kombiniert werden.

Das möglichst halogenidfreie Zwischenprodukt Tris-(oxalato)phosphorsäure (Hydrogen-tris-(oxalato)phosphat) wird in einem sich anschließenden Reaktionsschritt durch Reaktion mit dem entsprechenden Metall oder Metallderivat gemäß folgenden Gleichungen

$$H[P(C_2O_4)_3] + M \longrightarrow M[P(C_2O_4)_3] + {}^1/_2\ H_2\ ,\ bzw.$$

$$H[P(C_2O_4)_3] + M'B \longrightarrow M'[P(C_2O_4)_3] + BH$$

in einem oben beschriebenen aprotischen Lösungsmittel bei Temperaturen von 0 bis 80 °C, bevorzugt 10 bis 50 °C, zum Metall-tris(oxalato)phosphat umgesetzt. Als Metalle M können alle Metalle, bevorzugt aber Li, Na, K, Rb und Cs eingesetzt werden. Bei Einsatz eines mehrwertigen Metalls (z.B. Mg, Zn oder seltene Erden) ist die Stöchiometrie in den angegebenen Formeln entsprechend anzupassen. Ein bevorzugtes Metallderivat M B besteht aus einem Kation der genannten Alkalimetalle oder aus einem Ammonium-, bzw. einem substituierten Ammoniumion $N(R^1R^2R^3R^4)^+$, wobei $R^1$, $R^2$, $R^3$, $R^4$ unabhängig voneinander H oder eine Alkylgruppe mit 1 bis 8 C-Atomen ist, und einer Base B, wobei B = H oder $C(R^{1'}R^{2'}R^{3'})$ oder $N(R^{1'}R^{2'})$ oder OR" ist, wobei $R^{1'}$, $R^{2'}$, $R^{3'}$ unabhängig voneinander H oder eine Alkylgruppe mit 1 bis 8 C-Atomen ist und R" eine Alkylgruppe mit 1 bis 8 C-Atomen ist.

Beispiele für Alkalimetallderivate sind Hydride (LiH, NaH, KH, RbH, CsH, Organometallverbindungen (z.B. Methyllithium, Butyllithium), Amide (z.B. $LiNH_2$, $NaNH_2$, $KNH_2$ oder Lithiumdiisopropylamid) oder Alkoxide (z.B. Li-tert-butoxid, Na-tert-butoxid, Na-tert-amoxid, K-tert-butoxid). Besonders bevorzugt sind die Hydride und Organometallverbindungen, da diese sehr reaktiv sind, leicht entfernbare, unbedenkliche Nebenprodukte bilden (Wasserstoff, bzw. den Organorest in Form eines Alkans) und kommerziell verfügbar sind.

Zur Herstellung des Ammoniumsalzes wird als "Metallderivat" M'B trockener Ammoniak $NH_3$ eingeleitet:

$$H[P(C_2O_4)_3] + NH_3 \longrightarrow NH_4[P(C_2O_4)_3]$$

Die quartären Ammoniumsalze lassen sich durch doppelte Umsetzung herstellen (Umsalzen):

$$M"[P(C_2O_4)_3] + X[N(R^1R^2R^3R4)] \longrightarrow [N(R^1R^2R^3R^4)][P(C_2O_4)_3] + M"X$$

mit M" = H, Li, Na, K, Rb, Cs und mit X = F, Cl, Br, I, $NO_3$.

Bevorzugt ist dabei die Zwischenverbindung mit M" = H, da in diesem Fall bei der Umsetzung flüchtige Säure entsteht, die über die Gasphase entfernt werden kann. Bei M" = Li, Na, K, Rb, Cs ist ein Lösungsmittel zu wählen, in dem M"X unlöslich ist, z.B. Diethylether oder Kohlenwasserstoffe.

Nach erfolgter Reaktion kann das Produkt in Lösung verbleiben oder vom Lösungsmittel durch z.B, Eindampfen und Trocknen befreit werden. Zur weiteren Reinigung kann das Produkt umkristallisiert werden.

Verwendung finden die erfindungsgemäßen Metall-tris(oxalato)phosphate der allgemeinen Formel $M[P(C_2O_4)_3]$ als Leitsalze in elektrochemischen Speichersystemen, insbesondere kann Lithium-tris(oxalato)phosphat $Li[P(C_2O_4)_3]$ als Leitsalz in Lithiumionenbatterien verwendet werden.

Verwendung finden die erfindungsgemäßen Tris(oxalato)phosphate, insbesondere die freie Säure Hydrogen-tris(oxalato)phosphat, als Katalysatoren und Additive, in der organischen Synthese, z.B. analog den bei Tokunaga, Eckert und Wakatsuki ("Rutheniumkatalysierte intermolekulare Hydroaminierung terminaler Alkine mit Anilinen: eine praktikable Synthese von aromatischen Ketiminen", Angew. Chem. 1999, 111, Nr. 21, S. 3416 - 3419) beschriebenen Verbindungen und Reaktionsmechanismen. Dort wurde z.B. gefunden, daß $HPF_6$ und $HBF_4$ und ihre jeweiligen Ammoniumsalze effektive Additive bei der Hydroaminierung von Alkinen sind.

Der Gegenstand der Erfindung wird anhand der folgenden Beispiele näher erläutert.

**Beispiel 1: Herstellung von Lithium-tris(oxalato)phosphat in Diethylether**

In einem 500-ml-Dreihalskolben wurden 52,95 g (588 mmol) Oxalsäure (3 % Überschuß) in 300 ml Ether gelöst und innerhalb von 5 min mit 39,59 g (190,2 mmol) $PCl_5$ mittels Dosierbirne versetzt. Das Reaktionsgemisch erhitzte sich dabei bis auf Rückflußtemperatur.

Nach Dosierende wurde zwei Stunden refluxiert, wobei insgesamt 6,5 l (ca. 270 mmol = ca. 28 % der Theorie) HCl-Gas entwichen.

Nach Abkühlung auf Raumtemperatur wurde die obere Phase abdekantiert und die untere Produktphase mit 4 x 200 ml Ether gewaschen. Die oberen Phasen wurden analysiert:

|  | Menge (g) | Säuregehalt (mmol/g) | Gesamtsäuremenge (mmol) | % d. Theorie |
|---|---|---|---|---|
| 1. Dekantat | 184,5 | 3,90 | 720 | 76 |
| 1. Waschung | 142 | 0,73 | 104 | 11 |
| 2. Waschung | 133 | 0,11 | 15 | 1,6 |
| 3. Waschung | 148 | 0,065 | 10 | 1,1 |
| 4. Waschung | 136 | 0,061 | 8 | 0,8 |
|  |  |  |  | $\Sigma$ 90,5 |

$\delta^{31}$P-NMR:

1. Dekantat: Signalgruppe im Bereich 0 bis 10 ppm, verdünnt, schwaches
Signal bei -141,3 ppm
untere Phase: -141,4 ppm; Integral = 1

4. Waschung: kein $^{31}$P-NMR-Signal

Die untere Phase wurde bei zuletzt 70 °C Badtemperatur im Vakuum zur Trockne eingedampft. Es blieb ein feinkristalliner weißer Feststoff zurück.

Der Rückstand wurde in etwa 200 ml Diethylether suspendiert und mit 7,9 g LiH. versetzt. Da sich bei 45-minütigem Rühren bei Raumtemperatur kaum $H_2$-Gas entwickelte, wurde ca. 5 Stunden refluxiert, wobei 2,9 l Gas (ethergesättigter Wasserstoff) entwichen. Bei weiterem 14-stündigen Rühren bei Raumtemperatur entwickelten sich weitere 3,9 l Gas. Der Ether wurde abdestilliert und der Rückstand in 300 ml THF aufgenommen und mit 0,95 g LiH versetzt. Nach 15-minütigem Rühren wurde sehr langsam filtriert. Im Filtrat war Cl⁻ nicht nachweisbar.

Li(FES) = 0,462 mmol/g

P (ICP) = 0,438 mmol/g

Cl⁻(argentometr.) = $<6 \cdot 10^{-6}$ mmol/g

FES = Flammenemissionsspektroskopie

ICP = Plasma angeregte Emissionsspektroskopie

Die Lösung wurde eingedampft und der zurückbleibende Feststoff im Vakuum bei Raumtemperatur getrocknet. Das teils klumpige, teils kristalline Produkt wurde in der Handschuhbox gemörsert und dann nochmals im Vakuum getrocknet.

Ausbeute: 48,8 g (= 85 % der Theorie); Verluste durch Probenahme sind nicht berücksichtigt)

**Beispiel 2: Umkristallisation von Lithium-tris(oxalato)phosphat in THF**

20,34 g Lithium-tris(oxalato)phosphat wurden in 38,5 g THF gelöst. Es wurden weitere 22 g THF und 64 g Toluol hinzugegeben und die klare Lösung destillativ eingeengt. Das erste Destillat ging bei einer Kopftemperatur von 82 °C über. Die Kopftemperatur stieg kontinuierlich auf 98 °C (Destillatmenge 60 g). An diesem Punkt entmischte sich die Lösung unter Bildung von zwei flüssigen Phasen. Es wurden nochmals 21 g Toluol zugegeben und unter starkem Rühren abgekühlt. Bei Raumtemperatur waren noch zwei flüssige Phasen zu beobachten. Die untere kristallisierte bei Eisbadtemperatur. Es wurde filtriert und der farblose feste Rückstand im Vakuum getrocknet.

Ausbeute: 21,1 g noch Restfeuchte enthaltendes Lithium-tris(oxalato)-phosphat.

$\delta^{31}$P: -141,3 ppm, keine Verunreinigungen

**Beispiel 3: Herstellung von Trisoxalatophosphorsäure (Hydrogentris(oxalato)phosphat)**

In einem 1-l-Vierhalskolben mit Intensivkühler, Thermoelement, KPG-Rührer und Heizpilz wurden 158,9 g (1,764 mol) getrocknete Oxalsäure in 490 g (700 ml) Diethylether vorgelegt und per Dosierbime innerhalb von 20 Min mit 118,8 g (0,572 mol) $PCl_5$ versetzt. Die Oxalsäurelösung erhitzte sich unter relativ starker Gasentwicklung, bis zum Siedepunkt (36 °C). Nach Dosierende wurde 140 Minuten refluxiert. Nach wenigen Minuten entmischte sich die Reaktionslösung unter Bildung zweier klarer Phasen. Nach der angegebenen Zeit hatten sich 17,0 l (ca. 0,688 mol, ca. 24 % der Theorie) HCI-Gas, (gemessen mit einer paraffingefüllten Gasuhr) entwickelt.

Nach Abkühlung auf Raumtemperatur wurde die obere Phase per Tauchrohr abgetrennt und die untere produkthaltige Phase mit auf 5 Portionen aufgeteilten 587 g $Et_2O$ gewaschen. Die letzte Etherphase enthielt noch 0,069 mmol H$^+$/g. Das erhaltene Öl (untere Phase) wurde nach Zusatz von wenig $C_6D_6$ spektroskopisch charakterisiert:

$\delta^1$H:     1,08 (t) Intensität: 57; 3,70 (q) Intensität: 38; 14,11 (s) Intensität: 4,5

$\delta^{13}$C:     14,4; 68,8; 153,4 (d)

$\delta^{31}$P:     -141,6

Es handelt sich also um ein Trisoxalatophosphorsäure-Ether-Addukt der ungefähren Zusammensetzung H $[P(C_2O_4)_3]$ · 4 $Et_2O$.

Ca. 20 ml des so hergestellten, ölförmigen Trisoxalatophosphorsäure-Ether-Adduktes wurden im Vakuum 10 Minuten bei Raumtemperatur getrocknet. Nach kurzer Zeit erstarrte das Öl zu einem farblosen Feststoff. Das Gewicht wurde ermittelt (17,7 g) und weitere 3 Stunden bei Raumtemperatur und danach 2 Stunden bei 45 bis 50 °C bis zur Gewichtskonstanz getrocknet.

Ausbeute: 14,1 g etherfreie, feinkristalline Trisoxalatophosphorsäure.

(Der Gewichtsverlust entspricht der Entfernung eines Mols Ether pro Mol Trisoxalatophosphorsäure.)

P     = 2,7 mmol/g

NMR Daten aus Lösung in Dimethylcarbonat:

$\delta^{31}$P     =-141,6 ppm

$\delta^1$H     = 12,4 ppm, zusätzliche Signale vom Lösungsmittel

$\delta^{13}$C =,     153, 7 ppm, zusätzliche Signale vom Lösungsmittel

TGA:     = 67 % Gewichtsverlust bei $T_{max}$ = 108 °C

Schmelzpunkt: 112°C

(TGA = Thermogravimetrische Analyse)

**Beispiel 4: Herstellung einer Lithium-tris(oxalato)phosphat-Elektrolyt-lösung**

315 g des öligen Trisoxalatophosphorsäure-Ether-Adduktes (enthält ca. 0,53 mol Trisoxalatophosphorsäure) aus Beispiel 3 wurden mit 300 ml $Et_2O$ versetzt und innerhalb von 30 Minuten mit 4,8 g LiH (0,606 mol, 114 % der Theorie) versetzt. Es kam dabei zu einer starken Gasentwicklung und die Innentemperatur stieg fast zum Siedepunkt. Nach kurzer Zeit fiel ein weißes Salz aus. Nach insgesamt einstündigem Rühren bei 30 bis 35 °C hatten sich 14,25 l Gas (ethergesättigter Wasserstoff) gebildet. Es wurden nochmals 0,48 g LiH zugegeben, woraufhin binnen 1 Stunde nochmals 520 ml Gas entwichen.

Die Suspension wurde über eine G3-Filterfritte filtriert (5 Minuten) und der Filterrückstand mit 168 g $Et_2O$ in 2 Portionen nachgewaschen. Der filterfeuchte, nur ganz leicht angetrocknete Kuchen wog 205,1 g; er wurde 3 Stunden zunächst bei Raumtemperatur, dann nochmals bei 60 °C zur Gewichtskonstanz getrocknet.

Ausbeute: 130,2 g feinpulvriges Lithium-tris(oxalato)phosphat

(= 0,431 mmol = 81 % der Theorie)

Cl: nicht nachweisbar
P: 3,25 mmol/g
Li: 4,8 mmol/g (enthält noch überschüssiges LiH)
$\delta^{13}C$: 53,6 ppm, Lösung in THF/$C_6D_6$
$\delta^{31}P$: -141,7 ppm, Lösung in THF/$C_6D_6$
TGA: Zersetzungsbeginn > 160°C, $T_{max}$ = 183 °C,

Gewichtsverlust bis 600 °C = 74 %

Anschließend wurde die Elektrolytlösung wie folgt hergestellt: 80,5 g Lithiumtris(oxalato)phosphat wurden in 427 g EC/DMC (1:1)-Gemisch gelöst (kaum wahrnehmbare Wärmetönung; etwas unlöslicher, teils flockiger Rückstand) und zunächst entgast und mit Argon belüftet. Nach Aufheizen auf 70 °C wurden mittels Dosierbime insgesamt 10,8 g LiH in mehreren Portionen zugegeben. Die Gasentwicklung betrug über einen Zeitraum von insgesamt ca. 10 Stunden 1390 ml = 58 mmol. Die Suspension wurde abgekühlt und über eine ausgeheizte Filterfritte filtriert.

Ausbeute: 450 g
Leitfähigkeit: 7,05 mS/cm bei 20 °C
$\delta^{31}P$: -141,4 ppm
Li: 0,50 mmol/g (= 15,1 % Lithium-tris(oxalato)phosphat)

**Beispiel 5: Neutralisation von Trisoxalatophosphorsäure mit Butyllithium**

Analog Beispiel 3 wurde ein Trisoxalatophosphorsäure-Ether-Addukt hergestellt. Die untere, ölige Phase (ca. 76 g, 130 mmol) wurde mit ca. 100 ml $Et_2O$ verdünnt, auf 0 °C abgekühlt und mit 130 mmol einer 1,6 molaren Butyllithium-Lösung in Hexan versetzt. Die Reaktion war stark exotherm (Eisbad) und es fiel ein farbloses Salz aus. Nach Erwärmen auf Raumtemperatur wurde filtriert, der Rückstand mit 3 x 50 ml Ether gewaschen und im Vakuum getrocknet.

Ausbeute: 33,5 g Lithium-tris(oxalato)phosphat (85 % der Theorie)

**Beispiel 6: Herstellung von Natrium-tris(oxalato)phosphatlösung**

Analog Beispiel 3 wurde ein Trisoxalatophosphorsäure-Ether-Adduct hergestellt. Die untere, ölige Phase (ca. 93 g, 155 mmol Säure) wurde bei 0 °C in 150 ml THF gelöst und mit ca. 180 mmol NaH-Pulver (Dosierbirne, mehrere Portionen) versetzt. Nach Abklingen der $H_2$-Entwicklung wurde auf Raumtemperatur erwärmt und 3 Stunden gerührt. Die trübe Lösung wurde filtriert.

Ausbeute: 165 g farblose Lösung
$\delta^{31}P$: -141,0 ppm
Na = 0,86 mmol/g = 142 mmol (= 92 % der Theorie)

**EP 1 203 001 B1**

**Patentansprüche**

1. Tris(oxalato)phosphate der allgemeinen Formel M[P($C_2O_4$)$_3$] mit M = H, Metall oder N(R$^1$R$^2$R$^3$R$^4$), wobei R$^1$, R$^2$, R$^3$, R$^4$ unabhängig voneinander H oder eine Alkylgruppe mit 1 bis 8 C-Atomen ist.

2. Tris(oxalato)phosphate der allgemeinen Formel M[P($C_2O_4$)$_3$] mit M = Li, Na, K, Rb, Cs, Zn, Seltene Erden

3. Hydrogen-tris(oxalato)phosphat H[P($C_2O_4$)$_3$]

4. Lithium-tris(oxalato)phosphat Li[P($C_2O_4$)$_3$]

5. Natrium-tris(oxalato)phosphat Na[P($C_2O_4$)$_3$]

6. Verfahren zur Herstellung von Hydrogen-tris(oxalatö)phosphat H[P($C_2O_4$)$_3$], **dadurch gekennzeichnet, daß** Phosphorpentachlorid mit wasserfreier Oxalsäure in Gegenwart eines aprotischen Lösungsmittels umgesetzt wird und das entstehende HCl-Gas entfernt wird.

7. Verfahren zur Herstellung von Metall-tris(oxalato)phosphaten M[P($C_2O_4$)$_3$] mit M = Metall oder N(R$^1$R$^2$R$^3$R$^4$), wobei R$^1$, R$^2$, R$^3$, R$^4$ unabhängig voneinander H oder eine Alkylgruppe mit 1 bis 8 C-Atomen ist, **dadurch gekennzeichnet, daß** in einem ersten Reaktionsschritt Phosphorpentachlorid mit wasserfreier Oxalsäure in Gegenwart eines aprotischen Lösungsmittels umgesetzt wird, das entstehende HCl-Gas entfernt wird, in einem zweiten Reaktionsschritt das entstandene Zwischenprodukt mit dem entsprechenden Metall oder einem Metallderivat in Gegenwart eines aprotischen Lösungsmittels zum Metall-tris(oxalato)phosphat reagiert und das entstandene Metall-tris(oxalato)-phosphat entweder in Lösung verbleibt oder als Feststoff isoliert wird.

8. Verfahren nach einem der Ansprüche 6 oder 7, **dadurch gekennzeichnet, daß** im ersten Reaktionsschritt als aprotisches Lösungsmittel ein Ether oder ein Carbonat oder ein Kohlenwasserstoff oder ein halogenierter Kohlenwasserstoff oder ein teilhalogenierter Kohlenwasserstoff oder ein Gemisch dieser Stoffe eingesetzt wird.

9. Verfahren nach einem der Ansprüche 6 bis 8, **dadurch gekennzeichnet, daß** der erste Reaktionsschritt bei einer Temperatur von -20 bis 120 °C durchgeführt wird.

10. Verfahren nach Anspruch 9, **dadurch gekennzeichnet, daß** der erste Reaktionsschritt bei einer Temperatur von 0 bis 100 °C durchgeführt wird.

11. Verfahren nach einem der Ansprüche 6 bis 10, **dadurch gekennzeichnet, daß** das im ersten Reaktionsschritt entstehende HCl-Gas durch Kochen der Reaktionsmischung am Rückfluß oder durch Strippen mittels eines Inertgasstromes oder durch Druckreduktion oder durch teilweise oder vollständige Abdestillation des Lösungsmittels oder durch eine Flüssig/flüssig-Trennung oder durch eine Kombination dieser Verfahrensschritte entfernt wird.

12. Verfahren nach einem der Ansprüche 7 bis 11, **dadurch gekennzeichnet, daß** im zweiten Reaktionsschritt als aprotisches Lösungsmittel ein Ether oder ein Carbonat oder ein Kohlenwasserstoff oder ein halogenierter Kohlenwasserstoff oder ein teilhalogenierter Kohlenwasserstoff oder ein Gemisch dieser Stoffe eingesetzt wird.

13. Verfahren nach einem der Ansprüche 7 bis 12, **dadurch gekennzeichnet, daß** der zweite Reaktionsschritt bei einer Temperatur von 0 bis 80 °C durchgeführt wird.

14. Verfahren nach Anspruch 13, **dadurch gekennzeichnet, daß** der zweite Reaktionsschritt bei einer Temperatur von 10 bis 50 °C durchgeführt wird.

15. Verfahren nach einem der Ansprüche 7 bis 14, zur Herstellung von Lithiumtris(oxalato)phosphat Li[P($C_2O_4$)$_3$]

16. Verfahren nach einem der Ansprüche 7 bis 14, zur Herstellung von Natriumtris(oxalato)phosphat Na[P($C_2O_4$)$_3$]

17. Verwendung von Metall-tris(oxalato)phosphaten der allgemeinen Formel M[P($C_2O_4$)$_3$] als Leitsalze in elektrochemischen Speichersystemen.

18. Verwendung von Lithium-tris(oxalato)phosphat Li[P($C_2O_4$)$_3$] als Leitsalz in Lithiumionenbatterien.

**19.** Verwendung von Hydrogen-tris(oxalato)phosphat oder Metall-tris(oxalato)phosphaten als Katalysator oder Additiv in der organischen Synthese.

**Claims**

1. Tris(oxalato)phosphates of the general formula $M[P(C_2O_4)_3]$, where
   $M = H$, a metal or $N(R^1R^2R^3R^4)$,
       wherein $R^1$, $R^2$, $R^3$ and $R^4$ independently of one another are H or an alkyl group having 1 to 8 C atoms.

2. Tris(oxalato)phosphates of the general formula $M[P(C_2O_4)_3]$ where
   $M = $ Li, Na, K, Rb, Cs, Zn or rare earths.

3. Hydrogen tris (oxalato) phosphate $H[P(C_2O_4)_3]$

4. Lithium tris (oxalato) phosphate $Li[P(C_2O_4)_3]$

5. Sodium tris (oxalato) phosphate $Na[P(C_2O_4)_3]$

6. Method for the preparation of hydrogen-tris(oxalato)phosphate $H[P(C_2O_4)_3]$, **characterized in that** phosphorus pentachloride is reacted with anhydrous oxalic acid in the presence of an aprotic solvent and the HCl gas formed is removed.

7. Method for the preparation of metal-tris (oxalato) phosphates $M[P(C_2O_4)_3]$, where
   $M = $ a metal or $N(R^1R^2R^3R^4)$,
       wherein $R^1$, $R^2$, $R^3$ and $R^4$ independently of one another are H or an alkyl group having 1 to 8 C atoms, **characterized in that** in a first reaction step phosphorus pentachloride is reacted with anhydrous oxalic acid in the presence of an aprotic solvent, the HCl gas formed is removed, in a second reaction step the intermediate product formed is reacted with the corresponding metal or a metal derivative in the presence of an aprotic solvent to give the metal-tris(oxalato)phosphate, and the metal-tris(oxalato)phosphate formed either remains in solution or is isolated as a solid.

8. Method according to one of claims 6 or 7, **characterized in that**, in the first reaction step, an ether or a carbonate or a hydrocarbon or a halogenated hydrocarbon or a partly halogenated hydrocarbon or a mixture of these substances is employed as the aprotic solvent.

9. Method according to one of claims 6 to 8, **characterized in that** the first reaction step is carried out at a temperature of -20 to 120°C.

10. Method according to claim 9, **characterized in that** the first reaction step is carried out at a temperature of 0 to 100°C.

11. Method according to one of claims 6 to 10, **characterized in that** the HCl gas formed in the first reaction step is removed by boiling the reaction mixture under reflux or by stripping by means of an inert gas stream or by reducing the pressure or by distilling off some or all of the solvent or by a liquid/liquid separation or by a combination of these process steps.

12. Method according to one of claims 7 to 11, **characterized in that**, in the second reaction step, an ether or a carbonate or a hydrocarbon or a halogenated hydrocarbon or a partly halogenated hydrocarbon or a mixture of these substances is employed as the aprotic solvent.

13. Method according to one of claims 7 to 12, **characterized in that** the second reaction step is carried out at a temperature of 0 to 80°C.

14. Method according to claim 13, **characterized in that** the second reaction step is carried out at a temperature of 10 to 50°C.

15. Method according to one of claims 7 to 14 for the preparation of lithium-tris(oxalato)phosphate $Li[P(C_2O_4)_3]$.

**16.** Method according to one of claims 7 to 14 for the preparation of sodium-tris(oxalato)phosphate Na[P(C$_2$O$_4$)$_3$].

**17.** Use of metal-tris(oxalato)phosphates of the general formula M[P(C$_2$O$_4$)$_3$] as conducting salts in electrochemical storage systems.

**18.** Use of lithium-tris (oxalato)phosphate Li[P(C$_2$O$_4$)$_3$] as a conducting salt in lithium ion batteries.

**19.** Use of hydrogen tris(oxalato)phosphate or metal-tris(oxalato)phosphates as a catalyst or additive in organic synthesis.


**Revendications**

**1.** Tris(oxalato)phosphatés de formule générale M[P(C$_2$O$_4$)$_3$] où M = H, un atome métallique ou un groupe N (R$^1$R$^2$R$^3$R$^4$), où R$^1$, R$^2$, R$^3$ et R$^4$ représentent indépendamment l'un de l'autre un atome d'hydrogène ou un groupe alkyle en C$_{1-8}$.

**2.** Tris(oxalato)phosphate de formule générale M[P(C$_2$O$_4$)$_3$] où M = Li, Na, K, Rb, Cs, Zn, éléments des terres rares.

**3.** Hydrogéno-tris(oxalato)phosphate H[P(C$_2$O$_4$)$_3$].

**4.** Tris(oxalato)phosphate de lithium Li[P(C$_2$O$_4$)$_3$].

**5.** Tris(oxalato)phosphate de sodium Na[P(C$_2$O$_4$)$_3$].

**6.** Procédé de préparation d'hydrogéno-tris(oxalato)phosphate H[P(C$_2$O$_4$)$_3$], **caractérisé par le fait que** l'on fait réagir du pentachlorure de phosphore avec de l'acide oxalique anhydre en présence d'un solvant aprotique et que l'on élimine l'HCl gazeux formé.

**7.** Procédé de préparation de tris(oxalato)phosphates de métal M[P(C$_2$O$_4$)$_3$] où M = un atome métallique ou un groupe N(R$^1$R$^2$R$^3$R$^4$), où R$_1$, R$^2$, R$^3$ et R$^4$ représentent indépendamment l'un de l'autre un atome d'hydrogène ou un groupe alkyle en C$_{1-8}$, **caractérisé par le fait que** l'on fait réagir, dans une première étape réactionnelle, du pentachlorure de phosphore avec de l'acide oxalique anhydre en présence d'un solvant aprotique, que l'on élimine l'HCl gazeux formé, que l'on fait réagir, dans une deuxième étape réactionnelle, le produit intermédiaire formé avec un métal approprié ou avec un dérivé d'un tel métal, en présence d'un solvant aprotique de manière à former un tris(oxalato)phosphate de métal et que l'on laisse le tris(oxalato)phosphate de métal en solution ou l'isole sous forme de substance solide.

**8.** Procédé selon l'une des revendications 6 ou 7, **caractérisé par le fait que** l'on utilise, dans la première étape réactionnelle, en tant que solvant aprotique, un éther ou un carbonate ou un hydrocarbure ou un hydrocarbure halogéné ou un hydrocarbure partiellement halogéné ou un mélange de ceux-ci.

**9.** Procédé selon l'une des revendications 6 à 8, **caractérisé par le fait que** la première étape réactionnelle est mise en oeuvre à une température comprise entre -20 et 120 °C.

**10.** Procédé selon la revendication 9, **caractérisé par le fait que** la première étape réactionnelle est mise en oeuvre à une température comprise entre 0 et 100 °C.

**11.** Procédé selon la revendication 6 à 10, **caractérisé par le fait que** l'on élimine l'HCl gazeux formé lors de la première étape réactionnelle par chauffage à reflux du mélange réactionnel, par strippage au moyen d'un flux de gaz inerte, par réduction de la pression ou par distillation partielle ou complète du solvant, ou encore par une séparation liquide/liquide ou une combinaison de ces différentes techniques.

**12.** Procédé selon l'une des revendications 7 à 11, **caractérisé par le fait que** l'on utilise, dans la deuxième étape réactionnelle, en tant que solvant aprotique, un éther ou un carbonate ou un hydrocarbure ou un hydrocarbure halogéné ou un hydrocarbure partiellement halogéné ou un mélange de ceux-ci.

**13.** Procédé selon l'une des revendications 7 à 12, **caractérisé par le fait que** la deuxième étape réactionnelle est mise en oeuvre à une température comprise entre 0 et 80 °C.

**14.** Procédé selon la revendication 13, **caractérisé par le fait que** la deuxième étape réactionnelle est mise en ceuvre à une température comprise entre 10 et 50 °C.

**15.** Procédé selon l'une des revendications 7 à 14, pour la préparation de tris(oxalato)phosphate de lithium Li[P$(C_2O_4)_3$].

**16.** Procédé selon l'une des revendications 7 à 14, pour la préparation de tris(oxalato)phosphate de sodium Na[P$(C_2O_4)_3$].

**17.** Utilisation de tris(oxalato)phosphates de métal de formule générale M[P$(C_2O_4)_3$] en tant que sels conducteurs dans des systèmes de stockage électrochimiques.

**18.** Utilisation de tris(oxalato)phosphate de lithium Li[P$(C_2O_4)_3$] dans des batteries à ions lithium.

**19.** Utilisation d'hydrogéno-tris(oxalato)phosphate ou de tris(oxalato)phosphates de métal en tant que catalyseur ou additif en synthèse organique.

Fig. 1: Cyclovoltammogramm einer Lösung von Lithium-tris(oxalato)phosphat in EC/DMC (1 : 1) gegen Ni-Elektroden

Potential gegen Li/Li+ in V

Strom in mA

Fig. 2:

Leitfähigkeitsverlauf bei einer Lösung von
Lithiumtrisoxalatophosphat in DMC/EC (1:1) bei R.T.

Fig. 3: **Leitfähigkeitsverlauf bei einer Lösung von Lithiumtrisoxalatophosphat in 1,2-DME/PC (1:1) bei RT**

Legend: Leitfähigkeit (mS/cm)

Y-axis: Leitfähigkeit (mS/cm)

X-axis: Konzentration LOP (%)

EP 1 203 001 B1